# FASCICULE DE BREVET EUROPEEN

(11) **EP 3 864 315 B1**
(45) Date de publication et mention de la délivrance du brevet: **05.07.2023**
(21) Numéro de dépôt: 19813618.6
(22) Date de dépôt: 11.10.2019
(51) Int. Cl.: F16D 65/00, F16D 65/092

(54) **PLAQUETTE DE FREIN AVEC COLLECTE DES PARTICULES ET POUSSIÈRES**
BREMSBELAG, DER PARTIKEL UND STAUB SAMMELT
BRAKE PAD WHICH COLLECTS PARTICLES AND DUST

(30) Priorité: 12.10.2018 FR 1859497
(43) Date de publication de la demande: 18.08.2021
(73) Titulaire: Tallano Technologie, 75015 Paris (FR)
(72) Inventeur: MAISTRE, Adrien, 92100 BOULOGNE BILLANCOURT (FR); LE BOULAIRE, Thibaut, 92100 BOULOGNE BILLANCOURT (FR); ADAMCZAK, Loïc, 92100 BOULOGNE BILLANCOURT (FR)
(74) Mandataire: Plasseraud IP
(86) Numéro de dépôt international: PCT/FR2019/052420
(87) Numéro de publication internationale: WO 2020/074841

(56) Documents cités:
- GB-A- 2 540 361

## Description

La présente invention est relative aux systèmes de freinage non polluants, destinés à être utilisés dans des machines comportant un élément rotatif dont on veut freiner la rotation, tels que par exemple des véhicules routiers ou ferroviaires, des éoliennes.

Dans de tels systèmes de freinage, des particules et poussières sont émises par le freinage à friction comme résultat de l'abrasion de plaquettes de frein contre l'élément rotatif. Cet élément rotatif est par exemple la roue du véhicule, ou un disque entraîné par la roue du véhicule. Il est connu que ces particules dispersées dans le milieu ambiant sont nocives pour la santé des individus. En outre la progression des motorisations électriques pour les véhicules automobiles a renforcé le besoin de traiter les particules et poussières résultant de l'abrasion des systèmes de freinage à friction.

Il existe donc un besoin de capter ces particules et poussières avant qu'elles soient libérées dans le milieu ambiant.

Ainsi, on connaît le document FR 3 057 040 qui décrit une plaquette de frein 10 dans un frein à disque, la plaquette comprenant une semelle 1 et une garniture 2 en matériau de friction, la garniture étant délimitée par une face de friction 26, une face de fixation 20, un bord intérieur 23, un bord extérieur 24, un bord arrière 21, un bord avant 22. La garniture 2 est pourvue d'une rainure de collecte 3 qui est ouverte sur la face de friction 26 et qui est située à proximité du bord arrière 21, la semelle 1 comprenant un trou d'aspiration 17 en communication fluide avec la rainure de collecte 3. Le trou d'aspiration 17 est relié à une source de dépression via des moyens de communication (non-représentés). La rainure de collecte 3 se prolonge jusqu'au bord intérieur 23 et y débouche sous la forme d'une fente 33.

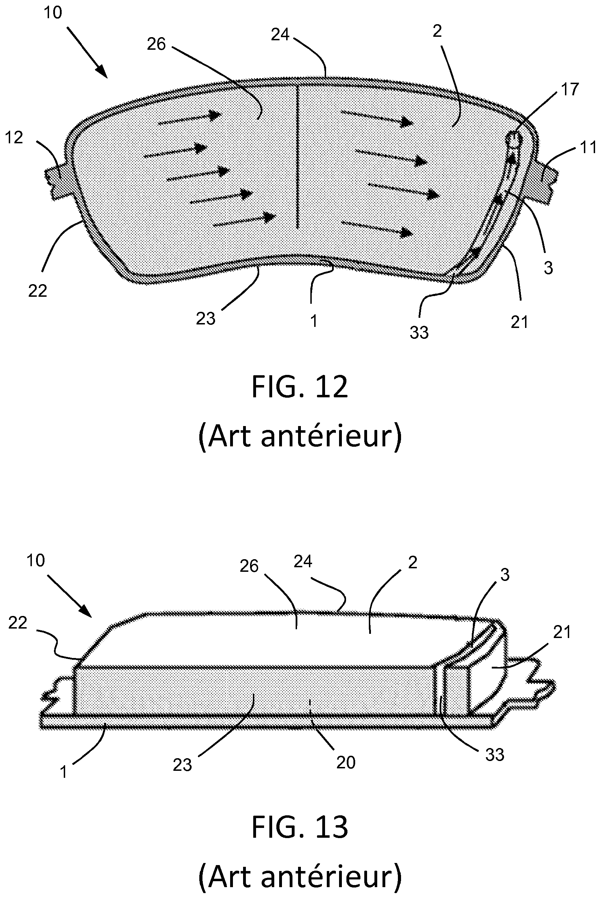

Une telle plaquette de frein est illustrée en figures 12 et 13, et représente l'art antérieur.

Cette plaquette présente cependant des inconvénients.

En effet, les inventeurs ont constaté qu'il se produisait une baisse des performances d'aspiration au fur et à mesure de l'usure de la garniture. En effet, l'usure entraine une augmentation des pertes de charge linéaires, pertes de charge qui forcent la turbine à réduire son débit. Il en résulte une diminution des performances de captation des particules et poussières par la rainure de collecte, et donc un rejet plus important de ces particules et poussières dans l'atmosphère, ce qui est indésirable.

La présente invention vise à remédier à ces inconvénients.

L'invention concerne une plaquette de frein comprenant une semelle avec une face externe et une face interne, et une garniture en matériau de friction fixée sur la face interne, la garniture étant délimitée par une face de friction, une face de fixation, un bord intérieur, un bord extérieur, un bord arrière, un bord avant, la garniture étant pourvue d'au moins une rainure de collecte ouverte sur la face de friction et située au moins en partie à proximité du bord arrière, la semelle comprenant au moins un trou d'aspiration en communication fluide avec la au moins une rainure de collecte, le au moins un trou d'aspiration étant relié à une source de dépression via des moyens de communication.

L'invention vise à proposer une plaquette de frein munie d'une rainure de collecte, dont les performances d'aspiration restent sensiblement constantes au fur et à mesure de l'usure de la garniture de la plaquette.

Ce but est atteint grâce au fait que la rainure de collecte se prolonge à au moins une de ses extrémités par un conduit dont l'extrémité externe débouche hors de la face de friction par une entrée, et dont l'extrémité interne débouche dans au moins une rainure de collecte par une sortie qui forme un saut de section avec au moins une rainure de telle sorte qu'il existe, en fonctionnement, une dépression entre l'entrée du conduit et au moins une rainure de collecte de part et d'autre du conduit.

Grâce à ces dispositions, les performances d'aspiration par la rainure de collecte restent sensiblement constantes, c'est-à-dire varient peu, au fur et à mesure de l'usure de la garniture de la plaquette, comme l'ont montré les essais réalisés par les inventeurs.

Avantageusement, l'extrémité externe débouche au moins du côté d'un des bords.

Selon l'invention, l'extrémité externe débouche dans la zone du au moins un des bords qui est la plus proche de la semelle et qui n'est pas consommée à l'issue du temps de fonctionnement normal de la plaquette.

Ainsi, la section du conduit reste constante durant toute la durée de vie de la plaquette.

Selon un mode de réalisation non conforme à la présente invention, le conduit traverse la semelle, l'extrémité externe débouchant sur la face externe de la semelle.

Ainsi, la fabrication de la plaquette est simplifiée.

Avantageusement, la rainure de collecte est constituée d'une rainure unique qui longe le bord arrière.

Avantageusement, la rainure de collecte longe en outre le bord avant.

Ainsi, la collecte des particules et poussières est réalisable dans les deux sens de déplacement du véhicule.

Avantageusement, la rainure de collecte est en forme de C ou en forme de E et longe le bord extérieur ou le bord intérieur.

Ainsi, la collecte des particules et poussières est plus efficace.

Avantageusement, la au moins une rainure de collecte est constituée d'une pluralité de rainures disjointes dont une première rainure qui longe le bord arrière.

Ainsi, la collecte des particules et poussières est plus efficace.

Par exemple, la pluralité de rainures est au nombre de deux.

Avantageusement, un des au moins un conduit s'étend entre une extrémité d'une rainure et une extrémité d'une autre rainure de la pluralité de rainures.

Ainsi, la collecte des particules et poussières est plus efficace. L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue de dessus d'une plaquette de frein selon l'invention,
- la figure 2 est une vue en perspective d'une plaquette de frein selon l'invention,
- la figure 3 est une vue en coupe le long de la rainure de collecte d'une plaquette de frein selon l'invention, selon la ligne III-III de la figure 2,
- la figure 4 est une vue en coupe le long de la rainure de collecte selon un autre mode de réalisation non conforme à la présente invention,
- la figure 5 est une vue en perspective d'un système de freinage comportant une plaquette de frein selon l'invention,
- la figure 6 est une vue en perspective d'une plaquette de frein selon un autre mode de réalisation de l'invention,
- la figure 7 est une vue en perspective d'une plaquette de frein selon encore un autre mode de réalisation de l'invention,
- la figure 8 est une vue de dessus d'une plaquette de frein selon encore un autre mode de réalisation de l'invention,
- la figure 9 est une vue de dessus d'une plaquette de frein selon encore un autre mode de réalisation de l'invention,
- la figure 10 est une vue de dessus d'une plaquette de frein selon encore un autre mode de réalisation de l'invention,
- la figure 11 est une vue de dessus d'une plaquette de frein selon encore un autre mode de réalisation de l'invention,
- la figure 12, déjà décrite, représente une plaquette selon l'art antérieur en vue de dessus,
- la figure 13, déjà décrite, représente une plaquette selon l'art antérieur en perspective.

La présente invention concerne une plaquette de frein 10 d'un frein dans le dispositif de freinage d'un élément rotatif 9 d'une machine. L'invention est décrite ci-dessous dans le cas où la machine est un véhicule routier où ce frein est un frein à disque. Cependant l'invention s'applique aussi bien au cas d'une plaquette de frein dans un frein à semelle qui frotte sur une roue, utilisé dans les véhicules sur rails (ferroviaire), ou au cas d'une plaquette de frein utilisée dans toute autre machine industrielle (par exemple dans le cas d'une éolienne). Dans tous les cas, le freinage d'un élément rotatif de la machine est réalisé par le frottement de la plaquette de frein sur cet élément rotatif lors de sa rotation.

Dans un frein à disque, le freinage s'effectue par friction entre un disque (qui est l'élément rotatif 9) qui est solidaire d'une roue du véhicule, et deux plaquettes de frein 10 qui sont plaquées de part et d'autre de ce disque 9 afin de le prendre en sandwich. Le disque 9 s'étend dans un plan principal et a pour axe de rotation un axe A qui est perpendiculaire à ce plan principal.

Chacune des plaquettes 10 s'étend dans ce plan principal de telle sorte que l'épaisseur d'une plaquette 10 s'étend selon l'axe de rotation A.

Le disque 9 tourne autour de l'axe de rotation A avec un sens de rotation FW, ce qui définit une direction tangentielle T qui est tangente à la circonférence du disque 9 et orientée dans le sens de rotation FW, et une direction radiale R orthogonale à l'axe de rotation A dans le plan principal du disque 9.

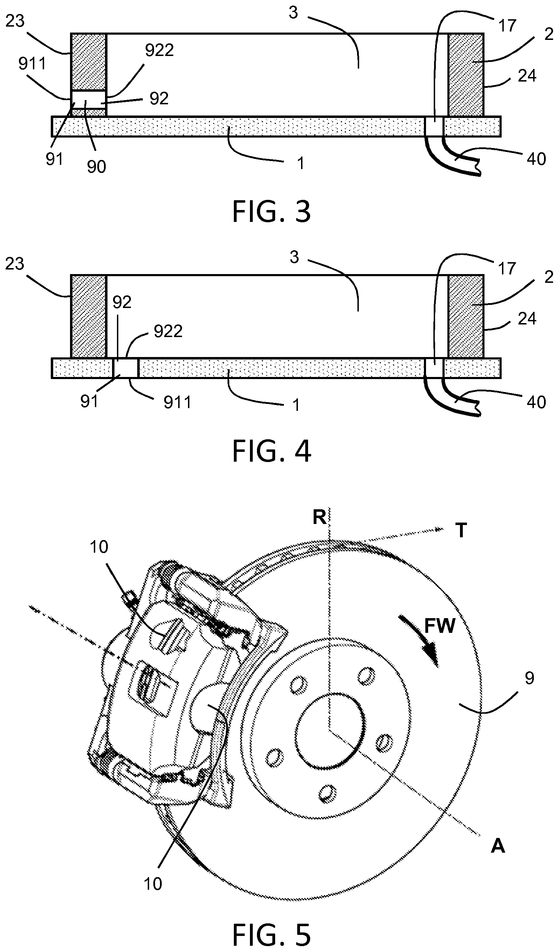

Ces éléments sont indiqués sur la figure 5, qui représente le dispositif de freinage monté sur le disque 9.

Dans la description qui suit les termes « intérieur » et « extérieur » désignent les bords ou zones de la plaquette de frein 10 (ou de ses composants) qui sont situés respectivement le plus proche et le plus éloigné de l'axe de rotation A, et les termes « avant » et « arrière » désignent les bords ou zones de la plaquette de frein 10 (ou de ses composants) qui sont situés en amont et en aval respectivement par rapport au sens de circulation des particules 28 émises par la garniture 2 (décrite ci-dessous) qui est également le sens de rotation FW.

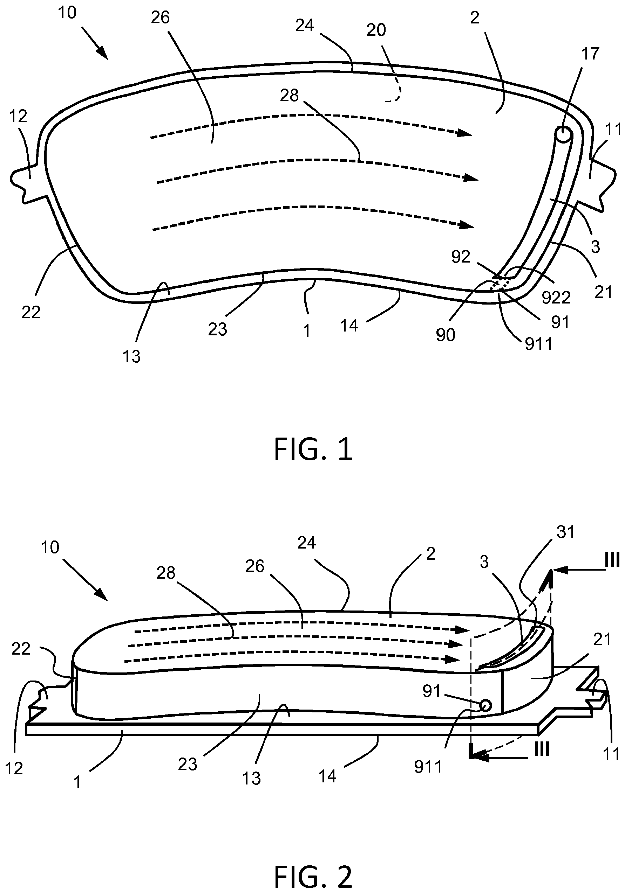

Comme illustré en figures 1 et 2, une plaquette de frein 10 comprend une semelle 1, aussi appelée embase. La semelle 1 est par exemple réalisée en matériau métallique. La semelle 1 est une plaque plane d'épaisseur sensiblement constante (par exemple entre 3 et 5 mm) dont la forme générale dans son plan principal est trapézoïdale avec des bords rectilignes ou courbes.

La semelle 1 comprend une première face 13 sur laquelle est fixée une garniture 2, et une deuxième face 14 qui est opposée à la première face 13.

La semelle 1 comprend également deux tenons (11, 12), qui s'étendent dans le plan de la semelle 1 à deux extrémités latérales de celle-ci, et qui servent au maintien et au guidage de la plaquette 10.

La plaquette de frein 10 comprend en outre une garniture 2 constituée d'un matériau de friction. Par exemple ce matériau est un matériau appelé « ferodo ».

La garniture 2 est délimitée par une face de friction 26 (face 'frottante'), une face de fixation 20 opposée à la face de friction 26, ces deux faces étant parallèles) et fixée sur la semelle 1, un bord intérieur 23, un bord extérieur 24, un bord arrière 21 et un bord avant 22. Les bords extérieur 24, arrière 21, et avant 22 sont convexes ou rectilignes, le bord intérieur 23 est concave ou rectiligne.

La face de friction 26 se rapproche progressivement de la semelle 1 au fur et à mesure de l'usure de la garniture 2. L'épaisseur de la garniture 2 (mesurée selon l'axe de rotation A) diminue par conséquent avec son usure.

En fonctionnement, la garniture 2 (et l'élément rotatif 9) relâche des particules 28 à cause de la friction entre la garniture 2 et le disque 9. Les trajets des particules 28 le long de la face de friction 26 sont représentés en pointillés sur les figures 1 et 2.

La garniture 2 est pourvue d'au moins une rainure de collecte 3 ouverte sur la face de friction 26 et située à proximité du bord arrière 21.

Par exemple, la surface de la partie de la face de friction 26 qui est située entre le bord arrière 21 et la rainure 3 est inférieure à 10% de la surface totale de la face de friction 26.

La profondeur de la ou les rainures 3 est égale à la hauteur de la garniture 2, c'est-à-dire que le fond de la ou les rainures 3 coïncide avec la première face 13 de la semelle 1.

La rainure de collecte 3, ou au moins une des rainures de collecte 3, s'étend au moins en partie le long du bord arrière 21, et est rectiligne ou suit la courbure du bord arrière 21. La dimension la plus petite de la rainure 3 est son épaisseur, mesurée dans le plan principal de la plaquette 10, sensiblement dans la direction tangentielle T.

Par exemple, la ou les rainures de collecte 3 a une section rectangulaire constante de son extrémité amont à son extrémité aval, et est donc d'épaisseur constante.

La garniture 2 est par exemple pourvue d'une seule rainure continue, sensiblement rectiligne ou présentant un ou plusieurs coudes entre deux ou plusieurs portions sensiblement rectilignes.

Alternativement, la garniture 2 est pourvue d'une pluralité de rainures de collecte 3 qui sont deux à deux disjointes. Par rainures disjointes, on signifie que les rainures ne communiquent pas entre elles autrement que, éventuellement, par un conduit 90, comme décrit ci-dessous.

Ainsi, dans la présente invention, soit la garniture 2 présente une seule rainure de collecte 3 (rainure unique), soit la garniture 2 présente une pluralité de rainures de collecte 3 disjointes.

En résumé, selon l'invention, la garniture 2 est pourvue (présente) au moins une rainure de collecte 3, et cette au moins une rainure de collecte 3 est soit constituée d'une unique rainure dont au moins une portion longe le bord arrière 21, soit constituée d'une pluralité de rainures disjointes dont une première rainure 3a qui longe le bord arrière 21.

Dans le cas d'une unique rainure de collecte 3, cette rainure comporte une seule portion rectiligne ou curviligne, ou plusieurs portions rectilignes ou curvilignes reliées par des coudes pour former un réseau de portions de rainures jointes. La rainure de collecte 3 est alors connexe.

On crée un flux d'air dans la ou les rainures de collecte 3, ce flux d'air 10 étant généré par une source de dépression (système d'aspiration), comme décrit ci-après.

Dans la partie de la description ci-dessous en référence aux figures 1 à 4, on décrit le cas où la rainure de collecte 3 est unique et se prolonge à une de ses extrémités par un conduit 90 (voir ci-dessous) qui débouche du côté du bord intérieur 23. L'invention s'applique de façon similaire au cas où la rainure de collecte 3 débouche du côté du bord extérieur 24.

Par « le conduit 90 débouche du côté d'un bord», on signifie que le conduit 90 est débouchant à une de ses extrémités à proximité du bord.

Dans tous les cas, un conduit 90 débouche à une de ses extrémités hors de la face de friction 26. Un conduit 90 débouche donc soit sur un bord (21, 22, 23, 24), soit dans une autre rainure.

Comme illustré en figure 1, et en figures 2 à 4, la rainure de collecte 3 est par exemple une rainure unique qui longe le bord arrière 21, présentant une première extrémité et une deuxième extrémité.

A proximité du bord extérieur 24, la rainure 3 se termine à sa deuxième extrémité par une extrémité borgne 31, qui est non débouchante sur le bord extérieur 24.

Au niveau de cette extrémité borgne 31, la semelle 1 comporte un trou d'aspiration 17 traversant qui débouche dans la rainure 3. Ce trou d'aspiration 17 est visible sur la figure 3. Ainsi, les particules 28 aspirées dans la rainure 3 passent dans le trou d'aspiration 17 puis dans un tuyau 40 qui fait partie du système d'aspiration. Le tuyau 40 est connecté à une de ses extrémités au trou d'aspiration 17. Ces éléments sont visibles sur la figure 3.

Le tuyau 40 est connecté à un mécanisme d'aspiration (non-représenté) qui fait partie du système d'aspiration, et qui est apte à aspirer les particules 28 depuis la rainure 3 au travers du tuyau 40.

La rainure de collecte 3 se prolonge à sa première extrémité par un conduit 90.

Un conduit 90 est constitué d'une paroi latérale continue reliant deux extrémités, et n'est ouvert qu'à ces deux extrémités. Le conduit 90 forme ainsi un tunnel.

Le conduit 90 débouche à son extrémité externe 91 du côté du bord intérieur 23 par une entrée 911. Le conduit 90 débouche à son extrémité interne 92 dans la rainure de collecte 3 par une sortie 922. La sortie 922 forme un saut de section avec la rainure 3, c'est-à-dire que la section augmente brusquement (à l'instar d'une marche) en passant du conduit 90 à la rainure 3.

Cette augmentation de section est visible sur la figure 3, qui est une coupe le long de la ligne III-III de la figure 2, c'est-à-dire tout le long de la rainure de collecte 3 et du conduit 90 depuis le bord intérieur 23 jusqu'au bord extérieur 24.

Grâce à cette augmentation brusque de section, il existe, en fonctionnement, une dépression entre l'entrée 911 et la rainure de collecte 3 de part et d'autre du conduit 90, c'est-à-dire au travers du conduit 90.

Comme illustré sur les figures 1 à 3, le conduit 90 débouche par son entrée 911 sur le bord intérieur 23.

Ainsi, en fonctionnement, l'air circule depuis l'entrée 911 au travers du conduit 90 jusqu'à la sortie 922 puis dans la rainure 3 jusqu'au trou d'aspiration 17, puis dans le tuyau 40, ce qui permet l'évacuation des particules et poussières 28 présentes dans l'air. Cette circulation de l'air est spécifique au cas illustré en figures 1 à 3. D'une manière générale, les termes « entrée » et « sortie » ne sont pas nécessairement liés au sens de circulation de l'air dans le conduit 90.

Le conduit 90 est de section circulaire constante.

Alternativement, le conduit 90 est de section non-circulaire, et/ou est de section variable.

Avantageusement, l'entrée 911 débouche dans la zone du bord intérieur 23 (ou dans le cas général d'un des bords (21, 22, 23, 24) de la garniture 2) qui est la plus proche de la semelle 1 et qui n'est pas consommée à l'issue du temps de fonctionnement normal (durée de vie) de la plaquette 10.

Ainsi, durant toute la durée de vie de la plaquette 10, la section du conduit 90 reste constante, et les performances d'aspiration des particules 28 par la rainure de collecte sont conservées.

Cette zone de la garniture 2 qui n'est pas consommée à l'issue de la durée de vie de la plaquette 10 s'étend sur un certain pourcentage de la hauteur de la garniture 2 mesurée depuis la semelle 1.

Par exemple ce pourcentage est égal à un tiers de la hauteur initiale (avant usure) de la garniture 2.

Lorsque un conduit 90 se situe à une hauteur égale à ce pourcentage de hauteur intiale de la garniture 2, le conduit 90 joue un rôle de témoin visuel d'usure. En effet, l'atteinte du conduit 90 par usure de la garniture 2 indique une atteinte de la durée de vie de la plaquette 10.

Selon un exemple, non conforme à la présente invention, le conduit 90 ne débouche pas sur le bord intérieur 23. Au contraire, le conduit 90 traverse la semelle 1 depuis la rainure de collecte 3, de telle sorte que l'entrée 911 débouche sur la deuxième face 14 de la semelle 1. La sortie 922 se situe au niveau de la première face 13 de la semelle 1. Ce mode de réalisation est illustré en figure 4. La figure 4 est identique à la figure 3, à l'exception de la position du conduit 90.

Cet exemple présente l'avantage que le conduit 90 peut être percé dans la semelle 1 lors de sa fabrication, et il n'est pas nécessaire de former le conduit 90 dans la garniture 2. La fabrication de la plaquette 10 est donc simplifiée, et son coût est diminué.

En outre, la section du conduit 90 reste constante durant la durée de vie de la plaquette 10, et les performances d'aspiration des particules 28 par la rainure de collecte sont conservées.

Quel que soit le mode de réalisation, la dépression qui est créée au niveau de la sortie 922 et de la rainure de collecte 3, et le fait que la section du conduit 90 reste constante durant la majeure partie de la durée de vie de la garniture 2, permettent de maintenir une vitesse de flux constante dans la rainure de collecte 3, et donc un débit d'aspiration constant. Ainsi, les performances d'aspiration des particules 28 par la rainure de collecte sont conservées au fur et à mesure de l'usure de la garniture 2.

Dans l'exemple illustré en figure 1, l'extrémité externe 91 du conduit 90 débouche du côté du bord intérieur 23 par une entrée 911.

Plus généralement, dans le cas d'une rainure de collecte 3 qui est unique, l'extrémité externe 91 du conduit 90 débouche au moins du côté d'un du bord arrière 21, du bord avant 22, du bord intérieur 23, et du bord extérieur 24.

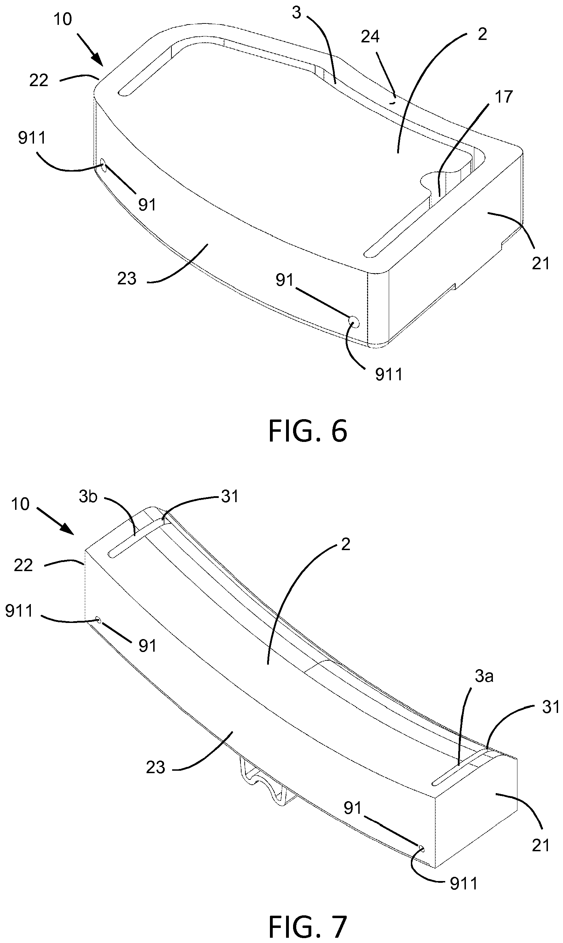

On décrit maintenant un autre mode de réalisation de l'invention, en référence à la figure 6. La figure 6 illustre une plaquette de frein dans le domaine ferroviaire.

La rainure de collecte 3 est une rainure unique en forme de C qui longe le bord arrière 21 et le bord avant 22. La portion centrale de la rainure de collecte 3 longe le bord extérieur 24 et relie la portion avant et la portion arrière de la rainure de collecte 3.

La portion arrière (qui longe le bord arrière 21) de la rainure de collecte 3 se prolonge à sa première extrémité par un conduit 90 qui débouche du côté du bord intérieur 23.

La portion avant (qui longe le bord avant 22) de la rainure de collecte 3 se prolonge à sa deuxième extrémité par un autre conduit 90 qui débouche du côté du bord intérieur 23.

Chacun de ces conduits 90 est similaire au conduit 90 qui a été décrit en référence aux figures 1 à 4.

Alternativement, chacun de ces deux conduits 90 a une géométrie différente, par exemple des sections différentes de façon à équilibrer les débits.

La semelle 1 comporte un trou d'aspiration 17 traversant qui débouche dans la portion arrière de la rainure 3, comme illustré en figure 6. La rainure 3 y est élargie (la rainure 3 peut aussi ne pas être élargie à cet endroit).

Alternativement, le trou d'aspiration 17 débouche dans la portion avant ou dans la portion centrale de la rainure 3.

Dans tous les cas, le trou d'aspiration 17 est situé à distance des extrémités de la rainure de collecte 3.

On décrit maintenant un autre mode de réalisation de l'invention, en référence à la figure 7. La figure 7 illustre une plaquette de frein dans le domaine ferroviaire.

La garniture 2 comporte deux rainures disjointes, à savoir une première rainure 3a qui longe le bord arrière 21, et une deuxième rainure 3b qui longe le bord avant 22.

La première rainure de collecte 3a se prolonge à sa première extrémité par un premier conduit 90 qui débouche du côté du bord intérieur 23.

La deuxième rainure de collecte 3b se prolonge à sa première extrémité par un deuxième conduit 90 qui débouche du côté du bord intérieur 23.

Chacun de ces conduits 90 est similaire au conduit 90 qui a été décrit en référence aux figures 1 à 4.

Alternativement, chacun de ces deux conduits 90 a une géométrie différente.

La première rainure 3a se termine à sa deuxième extrémité par une extrémité borgne 31, qui est non débouchante sur le bord extérieur 24.

La deuxième rainure 3b se termine à sa deuxième extrémité par une extrémité borgne 31, qui est non débouchante sur le bord extérieur 24.

Dans le cas de la première rainure 3a et de la deuxième rainure 3b, la semelle 1 comporte, au niveau de cette extrémité borgne 31, un trou d'aspiration 17 (non visible) traversant qui débouche dans chacune de ces rainures.

Ainsi, chacune des première rainure 3a et deuxième rainure 3b est similaire à la rainure 3 unique décrite en figures 1 à 4.

Dans le mode de réalisation de la figure 6 et dans le mode de réalisation de la figure 7, chacun des trous d'aspiration 17 est connecté à une extrémité d'un tuyau 40 qui fait partie du système d'aspiration, de telle sorte que les particules 28 sont aptes à être aspirées par ces trous d'aspiration 17. Les modes de réalisation des figures 6 et 7, exemples où la garniture 2 présente une ou des rainures de collecte 3 à la fois à proximité du bord arrière 21 et du bord avant 22, permettent d'optimiser la collecte des particules dans les deux sens de déplacement du véhicule (deux sens de rotation de l'élément rotatif 9 par rapport à la garniture 2).

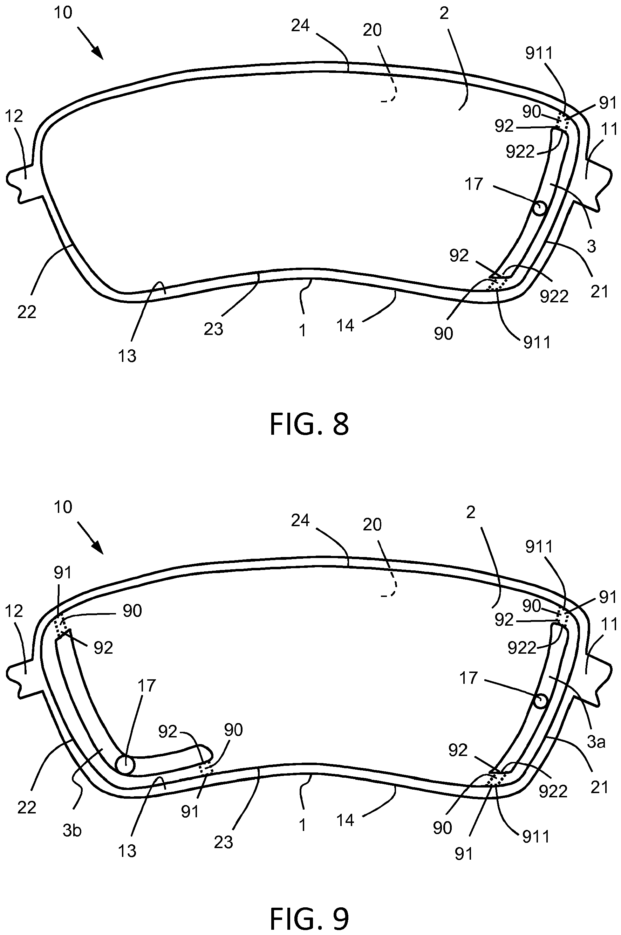

On décrit maintenant un autre mode de réalisation de l'invention, en référence à la figure 8.

La plaquette de frein illustrée en figure 8 est une modification de la plaquette de frein illustrée en figure 1. Hormis les différences décrites ci-dessous, ces deux plaquettes sont identiques.

Dans la plaquette en figure 8, la rainure de collecte 3 se prolonge à sa première extrémité, du côté du bord intérieur 23, par un conduit 90, et en plus se prolonge à sa deuxième extrémité, du côté du bord extérieur 24, par un autre conduit 90.

Le conduit 90 débouche à son extrémité externe 91 du côté du bord extérieur 24 par une entrée 911. Le conduit 90 débouche à son extrémité interne 92 dans la rainure de collecte 3 par une sortie 922. La sortie 922 forme un saut de section avec la rainure 3.

La semelle 1 comporte un trou d'aspiration 17 traversant qui débouche dans la rainure de collecte 3, comme illustré en figure 8.

Le trou d'aspiration 17 est situé à distance des extrémités de la rainure de collecte 3, par exemple au milieu de la rainure de collecte 3 comme illustré en figure 8. Les deux conduits peuvent avoir des sections différentes en fonction de la position du trou d'aspiration 17.

Ainsi, en fonctionnement, l'air circule depuis les entrées 911 au travers des deux conduits 90 situés à la première extrémité et à la deuxième extrémité de la rainure 3, puis dans la rainure 3 jusqu'au trou d'aspiration 17, puis dans le tuyau 40, ce qui permet l'évacuation des particules et poussières 28 présentes dans l'air.

On décrit maintenant un autre mode de réalisation de l'invention, en référence à la figure 9.

La plaquette de frein illustrée en figure 9 est une modification de la plaquette de frein illustrée en figure 8. Hormis les différences décrites ci-dessous, ces deux plaquettes sont identiques.

La rainure 3 illustrée en figure 9 comporte une première rainure 3a identique à la rainure illustrée en figure 8, et déjà décrite. La rainure 3 comporte en outre une deuxième rainure 3b qui longe le bord avant 22 sur une première portion et le bord intérieur 23 sur une deuxième portion, ces deux portions étant reliées par un coude. Le coude se situe donc au niveau de l'intersection du bord avant 22 et du bord intérieur 23.

La première portion de la deuxième rainure 3b se termine par une première extrémité qui se situe du côté du bord extérieur 24. La première portion se prolonge à cette première extrémité par un conduit 90. Le conduit 90 débouche à son extrémité externe 91 du côté du bord extérieur 24 par une entrée 911 (par souci de lisibilité de la figure, cette référence y est omise).

Le conduit 90 débouche à son extrémité interne 92 dans cette première portion de la deuxième rainure 3b par une sortie 922 (par souci de lisibilité de la figure, cette référence y est omise). La sortie 922 forme un saut de section avec la seconde rainure 3b.

La deuxième portion de la deuxième rainure 3b se termine par une deuxième extrémité qui se situe du côté du bord intérieur 23. La première portion se prolonge à cette deuxième extrémité par un conduit 90. Le conduit 90 débouche à son extrémité externe 91 du côté du bord intérieur 23 par une entrée 911 (par souci de lisibilité de la figure, cette référence y est omise).

Le conduit 90 débouche à son extrémité interne 92 dans cette deuxième portion de la deuxième rainure 3b par une sortie 922. La sortie 922 forme un saut de section avec la seconde rainure 3b.

La semelle 1 comporte un trou d'aspiration 17 traversant qui débouche dans la première rainure 3a, comme décrit en référence à la figure 8. La semelle 1 comporte un autre trou d'aspiration 17 traversant qui débouche dans la seconde rainure 3b au niveau du coude de cette deuxième rainure 3b.

Dans tous les modes de réalisation ci-dessus et ci-dessous, lorsque le conduit 90 débouche à son extrémité externe 91 par une entrée 911 qui est du côté du bord extérieur 24 ou du bord intérieur 23 et qui est à proximité du bord arrière 21 ou du bord avant 22, le conduit 90 peut, alternativement, déboucher à son extrémité externe 91 par une entrée 911 qui se situe à l'intersection du bord extérieur 24 ou du bord intérieur 23 et du bord arrière 21 ou du bord avant 22.

Le conduit 90 peut, alternativement, traverser la semelle 1 pour déboucher à son extrémité externe 91 par une entrée 911 qui débouche sur la deuxième face 14 de la semelle 1.

On a décrit ci-dessus, et illustré en figures 7 et 9, les cas d'une pluralité de rainures de collecte 3 disjointes qui se prolongent chacune à au moins une de leurs extrémités par un conduit 90 qui débouche du côté d'un des bords (21, 22, 23, 24) de la garniture 2.

Alternativement, ou en complément, la garniture 2 est pourvue d'une pluralité de rainures de collecte 3 disjointes, et où au moins un des conduits 90 s'étend entre une extrémité d'une des rainures 3 et une extrémité d'une autre des rainures 3.

Ainsi, dans le cas d'une pluralité de rainures de collecte 3, les configurations suivantes sont possibles :
(a) au moins un conduit 90 débouche à son extrémité interne 92 dans une extrémité d'une rainure 3 et débouche à son extrémité externe 91 du côté d'un des bords (21, 22, 23, 24) de la garniture 2 ;
(b) au moins un conduit 90 débouche à son extrémité interne 92 dans une extrémité d'une rainure 3 et débouche à son extrémité externe 91 dans une extrémité d'une autre rainure 3 ;
(c) au moins un conduit 90 débouche à son extrémité interne 92 dans une extrémité d'une rainure 3 et débouche à son extrémité externe 91 du côté d'un des bords (21, 22, 23, 24) de la garniture 2, et au moins un autre conduit 90 débouche à son extrémité interne 92 dans une extrémité d'une rainure 3 et débouche à son extrémité externe 91 dans une extrémité d'une autre rainure 3.

Dans le cas d'une rainure de collecte 3 unique, c'est la configuration (a) qui existe, avec soit un seul conduit 90, qui débouche dans une extrémité de la rainure 3, soit deux conduits 90, chacun débouchant à une des deux extrémités de la rainure 3.

Les figures 7 et 9 illustrent chacune un exemple de la configuration (a) dans le cas de deux rainures 3.

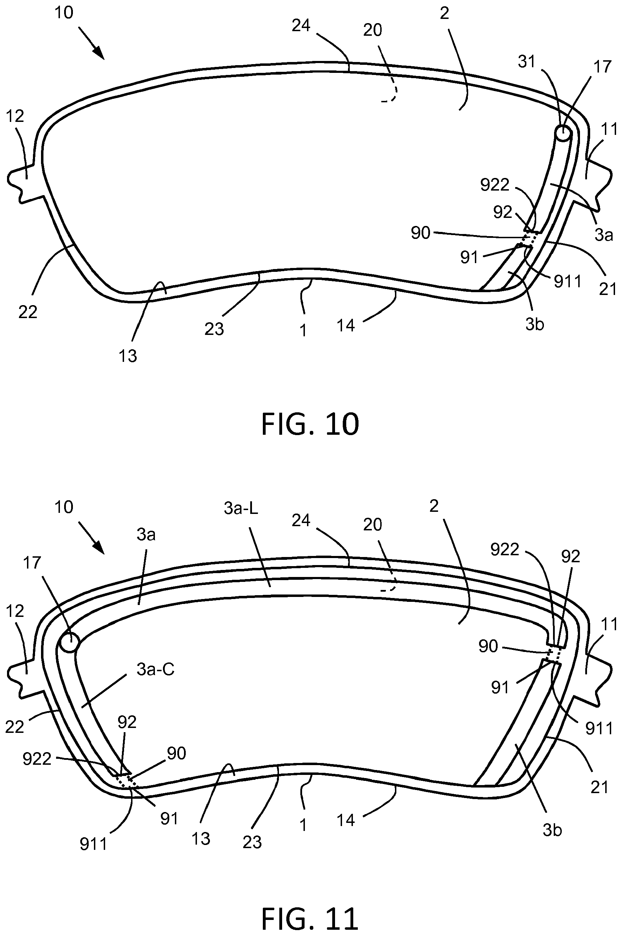

La figure 10, décrite ci-après, illustre un exemple de la configuration (b) dans le cas où la garniture 2 est pourvue de seulement deux rainures de collecte 3 disjointes, à savoir une première rainure 3a et une deuxième rainure 3b. La première rainure 3a et la deuxième rainure 3b sont dans le prolongement l'une de l'autre et s'étendent le long du bord arrière 21. Un conduit 90 unique s'étend entre une première extrémité de la première rainure 3a et une première extrémité de la deuxième rainure 3b.

Ainsi, le conduit 90 débouche à son extrémité externe 91 dans la rainure de collecte 3b par une entrée 911. L'entrée 911 forme un saut de section avec la rainure 3b. Le conduit 90 débouche à son extrémité interne 92 dans la rainure de collecte 3a par une sortie 922. La sortie 922 forme un saut de section avec la rainure 3a.

La seconde extrémité de la première rainure 3a est une extrémité borgne 31, qui est non débouchante sur le bord extérieur 24.

Au niveau de cette extrémité borgne 31, la semelle 1 comporte un trou d'aspiration 17 traversant qui débouche dans la rainure 3.

La seconde extrémité de la deuxième rainure 3b débouche sur le bord intérieur 23.

La figure 11, décrite ci-après, illustre un exemple de la configuration (c) dans le cas où la garniture 2 est pourvue de seulement deux rainures de collecte 3 disjointes, à savoir une première rainure 3a et une deuxième rainure 3b.

La première rainure 3a est en forme de L, et comporte une portion courte 3a-C qui longe le bord avant 22, et une portion longue 3a-L qui longe le bord extérieur 24.

La portion courte 3a-C s'étend depuis le coin du bord avant 22 et du bord extérieur 24 jusqu'à proximité du bord intérieur 23 où elle se termine par une extrémité. La portion courte 3a-C se prolonge à cette extrémité par un conduit 90. Le conduit 90 débouche à son extrémité externe 91 du côté du bord intérieur 23 par une entrée 911 et débouche à son extrémité interne 92 dans la première rainure 3a par une sortie 922.

La portion longue 3a-L s'étend depuis la portion courte 3a-C à laquelle elle est reliée par un coude. Ce coude se situe donc au niveau de l'intersection du bord avant 22 et du bord extérieur 24.

La semelle 1 comporte un trou d'aspiration 17 traversant qui débouche dans la première rainure 3a au niveau du coude de cette première rainure 3a.

La portion longue 3a-L s'étend jusqu'au coin du bord arrière 21 et du bord extérieur 24 où elle se courbe vers le bord arrière 21 jusqu'à une extrémité. Cette extrémité se situe en regard d'une extrémité de la deuxième rainure 3b.

La deuxième rainure 3b s'étend le long du bord arrière 21 depuis cette extrémité en regard de l'extrémité de la portion longue 3a-L de la première rainure 3a, jusqu'à une autre extrémité qui débouche sur le bord intérieur 23.

Un conduit 90 s'étend entre l'extrémité de la première rainure 3a et l'extrémité de la deuxième rainure 3b qui sont en regard.

Ainsi, le conduit 90 débouche à son extrémité externe 91 dans la deuxième rainure 3b par une entrée 911. L'entrée 911 forme un saut de section avec la deuxième rainure 3b. Le conduit 90 débouche à son extrémité interne 92 dans la rainure de collecte 3a par une sortie 922. La sortie 922 forme un saut de section avec la rainure 3a.

D'autres configurations de rainures 3 sont possibles, par exemple une rainure 3 unique qui fait presque toute la circonférence de la garniture 2, ou une pluralité de rainures 3 disjointes et communiquant entre elles par au moins un conduit 90 et qui ensemble font presque toute la circonférence de la garniture 2.

## Revendications

1. Plaquette de frein (10), la plaquette comprenant une semelle (1) avec une face externe (14) et une face interne (13), et une garniture (2) en matériau de friction fixée sur ladite face interne (13), la garniture étant délimitée par une face de friction (26), une face de fixation (20), un bord intérieur (23), un bord extérieur (24), un bord arrière (21), un bord avant (22), la garniture étant pourvue d'au moins une rainure de collecte (3) ouverte sur la face de friction (26) et située au moins en partie à proximité du bord arrière (21), la semelle comprenant au moins un trou d'aspiration (17) en communication fluide avec ladite au moins une rainure de collecte (3), ledit au moins un trou d'aspiration (17) étant relié à une source de dépression via des moyens de communication, ladite au moins une rainure de collecte (3) étant **caractérisée en ce qu'**elle se prolonge à au moins une de ses extrémités par un conduit (90) dont l'extrémité externe (91) débouche hors de ladite face de friction (26) par une entrée (911), et dont l'extrémité interne (92) débouche dans ladite au moins une rainure de collecte (3) par une sortie (922) qui forme un saut de section avec ladite au moins une rainure (3) de telle sorte qu'il existe, en fonctionnement, une dépression entre ladite entrée du conduit (911) et ladite au moins une rainure de collecte (3) de part et d'autre dudit conduit (90), ladite extrémité externe (91) débouchant dans la zone du au moins un desdits bords (21, 22, 23, 24) qui est la plus proche de ladite semelle (1) et qui n'est pas consommée à l'issue du temps de fonctionnement normal de ladite plaquette (10), ladite zone s'étendant sur un certain pourcentage de la hauteur de ladite garniture (2) mesurée depuis ladite semelle (1).

2. Plaquette de frein (10) selon la revendication 1 , **caractérisée en ce que** ladite au moins une rainure de collecte (3) est constituée d'une rainure unique qui longe ledit bord arrière (21).

3. Plaquette de frein (10) selon la revendication 2 **caractérisée en ce que** ladite au moins une rainure de collecte (3) longe en outre ledit bord avant (22).

4. Plaquette de frein (10) selon la revendication 3 **caractérisée en ce que** ladite rainure de collecte (3) est en forme de C ou en forme de E et longe ledit bord extérieur (24) ou ledit bord intérieur (23).

5. Plaquette de frein (10) selon la revendication 1 , **caractérisée en ce que** ladite au moins une rainure de collecte (3) est constituée d'une pluralité de rainures disjointes dont une première rainure (3a) qui longe ledit bord arrière (21).

6. Plaquette de frein (10) selon la revendication 5, **caractérisée en ce que** ladite pluralité de rainures est au nombre de deux.

7. Plaquette de frein (10) selon l'une quelconque des revendications 5 à 6, **caractérisée en ce qu'**un desdits au moins un conduit (90) s'étend entre une extrémité d'une rainure et une extrémité d'une autre rainure de la pluralité de rainures.

## Patentansprüche

1. Bremsbelag (10), wobei der Bremsbelag eine Grundplatte (1) mit einer Außenseite (14) und einer Innenseite (13) und einen auf der Innenseite (13) befestigten Belag (2) aus Reibmaterial umfasst, wobei der Belag von einer Reibseite (26), einer Befestigungsseite (20), einem inneren Rand (23), einem äußeren Rand (24), einem hinteren Rand (21) und einem vorderen Rand (22) begrenzt wird, wobei der Belag mit wenigstens einer Sammelnut (3) versehen ist, die auf der Reibseite (26) offen ist und sich wenigstens teilweise in der Nähe des hinteren Randes (21) befindet, wobei die Grundplatte wenigstens ein Absaugloch (17) umfasst, das mit der wenigstens einen Sammelnut (3) in Fluidverbindung steht, wobei das wenigstens eine Absaugloch (17) über Verbindungsmittel mit einer Unterdruckquelle verbunden ist, wobei die wenigstens eine Sammelnut (3) **dadurch gekennzeichnet ist, dass** sie an wenigstens einem ihrer Enden durch einen Kanal (90) verlängert wird, dessen äußeres Ende (91) außerhalb der Reibfläche (26) über einen Eingang (911) mündet und dessen inneres Ende (92) in die wenigstens eine Sammelnut (3) über einen Ausgang (922) mündet, welcher mit der wenigstens einen Nut (3) einen Querschnittssprung bildet, derart, dass im Betrieb ein Unterdruck zwischen dem Eingang (911) des Kanals und der wenigstens einen Sammelnut (3) beiderseits des Kanals (90) vorhanden ist, wobei das äußere Ende (91) in den Bereich des wenigstens einen der Ränder (21, 22, 23, 24) mündet, welcher der Grundplatte (1) am nächsten ist und welcher nach Ablauf der normalen Betriebszeit des Bremsbelages (10) nicht verbraucht ist, wobei sich dieser Bereich über einen gewissen prozentualen Anteil der von der Grundplatte (1) aus gemessenen Höhe des Belages (2) erstreckt.

2. Bremsbelag (10) nach Anspruch 1, **dadurch gekennzeichnet, dass** die wenigstens eine Sammelnut (3) aus einer einzigen Nut besteht, die am hinteren Rand (21) entlang verläuft.

3. Bremsbelag (10) nach Anspruch 2, **dadurch gekennzeichnet, dass** die wenigstens eine Sammelnut (3) außerdem am vorderen Rand (22) entlang verläuft.

4. Bremsbelag (10) nach Anspruch 3, **dadurch gekennzeichnet, dass** die Sammelnut (3) die Form eines "C" oder die Form eines "E" aufweist und am äußeren Rand (24) oder am inneren Rand (23) entlang verläuft.

5. Bremsbelag (10) nach Anspruch 1, **dadurch gekennzeichnet, dass** die wenigstens eine Sammelnut (3) aus mehreren getrennten Nuten besteht, darunter eine erste Nut (3a), welche am hinteren Rand (21) entlang verläuft.

6. Bremsbelag (10) nach Anspruch 5, **dadurch gekennzeichnet, dass** die Anzahl der mehreren Nuten zwei beträgt.

7. Bremsbelag (10) nach einem der Ansprüche 5 bis 6, **dadurch gekennzeichnet, dass** sich einer des wenigstens einen Kanals (90) zwischen einem Ende einer Nut und einem Ende einer anderen Nut von den mehreren Nuten erstreckt.

## Claims

1. Brake pad (10), the pad comprising a sole plate (1) with an outer face (14) and an inner face (13), and a lining (2) made of friction material fixed to said inner face (13), the lining being delimited by a friction face (26), an attachment face (20), an inner edge (23), an outer edge (24), a rear edge (21), and a front edge (22), the lining being provided with at least one collection groove (3) that is open on the friction face (26) and is located at least in part near the rear edge (21), the sole plate comprising at least one suction hole (17) in fluid communication with said at least one collection groove (3), said at least one suction hole (17) being connected to a negative pressure source via communication means, said at least one collection groove (3) being **characterized in that** it is extended, at at least one of its ends, by a duct (90) of which the outer end (91) is open away from said friction face (26), via an inlet (911), and of which the inner end (92) is open in said at least one collection groove (3) via an outlet (922) which forms a cross-sectional jump with said at least one groove (3) such that, during operation, a negative pressure exists between said inlet of the duct (911) and said at least one collection groove (3) one on each side of said duct (90), said outer end (91) being open in the region of the at least one among said edges (21, 22, 23, 24) which is closest to said sole plate (1) and which is not consumed at the end of the normal operating life of said pad (10), said region extending over a certain percentage of the height of said lining (2) measured from said sole plate (1).

2. Brake pad (10) according to claim 1, wherein said at least one collection groove (3) consists of a single groove which runs along said rear edge (21).

3. Brake pad (10) according to claim 2, wherein said at least one collection groove (3) also runs along said front edge (22).

4. Brake pad (10) according to claim 3, wherein said collection groove (3) is C-shaped or E-shaped and runs along said outer edge (24) or said inner edge (23).

5. Brake pad (10) according to claim 1, wherein said at least one collection groove (3) consists of a plurality of separate grooves including a first groove (3a) which runs along said rear edge (21).

6. Brake pad (10) according to claim 5, wherein said plurality of grooves is two in number.

7. Brake pad (10) according to any one of claims 5 to 6, wherein one of said at least one duct (90) extends between one end of one groove and one end of another groove among the plurality of grooves.
